# EUROPÄISCHE PATENTANMELDUNG

(11) **EP 4 424 130 A1**
(43) Veröffentlichungstag der Anmeldung: **04.09.2024**
(21) Anmeldenummer: 24152162.4
(22) Anmeldetag: 16.01.2024
(51) Int. Cl.: A01B 79/00, A01D 41/127

(54) **VERFAHREN ZUR BEARBEITUNG EINER LANDWIRTSCHAFTLICHEN FLÄCHE MITTELS EINER LANDWIRTSCHAFTLICHEN MASCHINENANORDNUNG**

(30) Priorität: 01.03.2023 DE 102023104989
(71) Anmelder: CLAAS Saulgau GmbH, 88340 Bad Saulgau (DE)
(72) Erfinder: Mümken, Philipp, 88400 Biberach an der Riß (DE); Fischer, Josef, 88400 Biberach (DE); Reinhardt, Martin, 88367 Hohentengen (DE); Schmid, Christian, 88696 Owingen (DE); Rupp, Magnus, 73494 Rosenberg (DE); Pflanze, Sascha, 88348 Bad Saulgau (DE); Mock, Andreas, 88284 Wolpertswende (DE); Ober, Martin, 78736 Trichtingen (DE); Oldenburg, Joachim, 33428 Harsewinkel (DE); Fugunt, Michael, 88410 Bad Wurzach (DE); Thiesmann, Waldemar, 49080 Osnabrück (DE); Becker, Michael, 88367 Hohentengen (DE); Monkenbusch, Robin, 33378 Rheda-Wiedenbrück (DE)
(74) Vertreter: Budach, Steffen

(57) **Zusammenfassung**

Die vorliegende Erfindung betrifft ein Verfahren zur Bearbeitung einer landwirtschaftlichen Fläche mittels mindestens einer landwirtschaftlichen Maschinenanordnung (10), insbesondere eines Gespanns aus landwirtschaftlichem Zugfahrzeug und adaptierten Anbaugerät, einer landwirtschaftlichen Erntemaschine oder dergleichen. Die mindestens eine landwirtschaftliche Maschinenanordnung (10) umfasst ein Fahrerassistenzsystem (11), welches über eine Recheneinheit (12) sowie eine mit der Recheneinheit (12) zur Übertragung von Daten kommunizierende Speichereinheit (13) verfügt. In der Speichereinheit (13) ist eine Feldbearbeitungskarte (16) hinterlegt, welche für die Bearbeitung der landwirtschaftlichen Fläche erforderliche Prozessschritte (2) und/oder Prozessparameter teilflächenspezifisch definiert. Das Verfahren ist dadurch gekennzeichnet, dass die in der Feldbearbeitungskarte (16) definierten Prozessschritte (2) und/oder Prozessparameter während der Bearbeitung der landwirtschaftlichen Fläche fortwährend mittels der Recheneinheit (12) des Fahrerassistenzsystems (11) anhand eines in der Speichereinheit (13) hinterlegten empirischen oder physikalischen Feldtrocknungsmodells (19) aktualisiert werden.

## Beschreibung

Die vorliegende Erfindung betrifft ein Verfahren zur Bearbeitung einer landwirtschaftlichen Fläche mittels mindestens einer landwirtschaftlichen Maschinenanordnung gemäß dem Oberbegriff des unabhängigen Patentanspruchs 1 sowie ein Fahrerassistenzsystem einer landwirtschaftlichen Maschinenanordnung gemäß dem Oberbegriff des unabhängigen Patentanspruchs 16.

Ein Futterernteprozess zeichnet sich durch verschiedene Prozessschritte aus, die abhängig vom Erntegut sowie von Umgebungsbedingungen variieren können. Übliche Prozessschritte eines Futterernteprozesses sind beispielsweise ein Mähen, ein Aufbereiten, ein Wenden oder Zetten, ein Schwaden, eine Schwadernte, ein Transportieren und/oder ein Einsilieren von Erntegut, wobei die einzelnen Prozessschritte bedarfsweise, abhängig vom Erntegut sowie von Umgebungsbedingungen, aufeinanderfolgen können. Die Summe derjeweils aufeinanderfolgenden Prozessschritte eines spezifischen Futterernteprozesses wird auch als Futterernteprozesskette bezeichnet.

Eine den Futterernteprozess bzw. die Futterernteprozesskette maßgeblich beeinflussende Größe ist die Trocknungsrate bzw. der Trockensubstanzgehalt des Ernteguts auf der landwirtschaftlichen Fläche. Diese Parameter verändern sich entlang der Futterernteprozesskette, insbesondere der Trockensubstanzgehalt sollte am Ende der Futterernteprozesskette in einem definierten Bereich liegen, sodass das erhaltene Erntegut bzw. Futtermittel eine gewünschte Qualität aufweist.

Aus der DE 20 2019 001 404 U1 ist in diesem Zusammenhang beispielsweise bekannt, die Aufbereitungsintensität von landwirtschaftlichen Früchten teilflächenspezifisch zu regeln, um einen möglichst konstanten Trockenmasse- bzw. Trockensubstanzgehalt von Erntegut zu erzielen.

Aus der EP 3 315 014 A1 ist weiterhin bekannt das Trocknungsverhalten von Erntegut auf Basis eines Trocknungswertes vorherzusagen und hieraus einen empfohlenen Erntezeitpunkt zu bestimmen.

Der DE 20 2019 001 404 U1 haftet der Nachteil an, dass lediglich der Prozessschritt des Aufbereitens von Erntegut unter Berücksichtigung des Trockenmasse- bzw. Trockensubstanzgehalts betrachtet wird, alle anderen Prozessschritte der Futterernteprozesskette hingegen unberücksichtigt bleiben. Der EP 3 315 014 A1 haftet der Nachteil an, dass lediglich idealisierte Zeitpunkte für den Beginn verschiedener vorgegebener Prozessschritte einer Ernteprozesskette bestimmt werden.

Ausgehend hiervon ist es demnach die Aufgabe der vorliegenden Erfindung die beschriebenen Nachteile des Standes der Technik auszuräumen und insbesondere ein Verfahren anzugeben, welches die Abhängigkeit der Trocknungsrate von Erntegut, insbesondere deren Änderung entlang der Futterernteprozesskette, auf die einzelnen Prozessschritte besser berücksichtigt und sicherstellt, dass ein qualitativ hochwertiges, für die Einlagerung geeignetes und einen hohen Energiegehalt aufweisendes Erntegut erzeugt wird.

Diese Aufgabe wird erfindungsgemäß durch die Merkmale des unabhängigen Patentanspruchs 1 gelöst, wobei vorteilhafte Weiterbildungen des erfindungsgemäßen Verfahrens Gegenstand der entsprechenden abhängigen Patentansprüche 2 bis 15 sind.

Demnach betrifft die vorliegende Erfindung ein Verfahren zur Bearbeitung einer landwirtschaftlichen Fläche mittels mindestens einer landwirtschaftlichen Maschinenanordnung, insbesondere eines Gespanns aus landwirtschaftlichem Zugfahrzeug und adaptierten Anbaugerät, einer landwirtschaftlichen Erntemaschine oder dergleichen. Die mindestens eine landwirtschaftliche Maschinenanordnung umfasst ein Fahrerassistenzsystem, welches über eine Recheneinheit sowie eine mit der Recheneinheit zur Übertragung von Daten kommunizierende Speichereinheit verfügt. In der Speichereinheit ist eine Feldbearbeitungskarte hinterlegt, welche für die Bearbeitung der landwirtschaftlichen Fläche erforderliche Prozessschritte und/oder Prozessparameter teilflächenspezifisch definiert. Das Verfahren ist dadurch gekennzeichnet, dass die in der Feldbearbeitungskarte definierten Prozessschritte und/oder Prozessparameter während der Bearbeitung der landwirtschaftlichen Fläche fortwährend mittels der Recheneinheit des Fahrerassistenzsystems anhand eines in der Speichereinheit hinterlegten empirischen oder physikalischen Feldtrocknungsmodells aktualisiert werden.

Indem die Recheneinheit des Fahrerassistenzsystems die vorhandene Feldbearbeitungskarte mit den definierten Prozessschritten und/oder Prozessparameter anhand des Feldtrocknungsmodells verarbeitet, wird der Futterernteprozess gesamtheitlich im Hinblick auf das Trocknungsverhalten des Erntegut auf der landwirtschaftlichen Fläche optimiert. Die fortwährende Aktualisierung der einzelnen Prozessschritte und/oder Prozessparameter während der Bearbeitung der landwirtschaftlichen Fläche sorgt dafür, dass die Futterernteprozesskette stets an die vorliegenden Gegebenheiten angepasst wird. Durch die Verarbeitung der Daten in der Recheneinheit wird der Nutzer von der Aufgabe entbunden, das Trocknungsverhalten des Erntegut selbsttätig zu bestimmen und die Prozessschritte und/oder Prozessparameter der definierten Futterernteprozesskette anzupassen. Die Abhängigkeit des Futterernteprozesses bzw. der Futterernteprozesskette von Beurteilungen, die von den Kenntnissen eines Nutzers, welche erfahrungsbedingt erheblich schwanken können, wird aufgrund der Nutzung eines robusten Feldtrocknungsmodells erheblich reduziert, wodurch wiederum sichergestellt werden kann, dass ein qualitativ hochwertiges, für die Einlagerung geeignetes und einen hohen Energiegehalt aufweisendes Erntegut aufgrund einer idealen an die vorliegenden Gegebenheiten angepassten Futterernteprozesskette erzeugt wird.

Gemäß einer vorteilhaften Weiterbildung der Erfindung ist vorgesehen, dass die Recheneinheit eine aktualisierte Feldbearbeitungskarte generiert und diese in der Speichereinheit des Fahrerassistenzsystems hinterlegt.

Hierdurch wird sichergestellt, dass der Nutzer und/oder die landwirtschaftliche Maschinenanordnung, der bzw. die mit der Durchführung eines nachgelagerten Prozessschrittes aus der Futterernteprozesskette beauftragt ist, stets die aktualisierte Feldbearbeitungskarte, also die aktualisierten Informationen, Daten bzw. Auskünfte zu den Prozessschritten und/oder Prozessparameter, vorliegen hat und somit die für die vorliegenden Gegebenheiten ideale, gegebenenfalls angepasste, Futterernteprozesskette abarbeitet.

Gemäß einer vorteilhaften Weiterbildung der Erfindung ist vorgesehen, dass das Feld Trocknungsmodell auf mindestens einer auf einer thermodynamischen Gesetzmäßigkeit beruhenden Exponentialfunktion basiert.

Gemäß einer vorteilhaften Weiterbildung der Erfindung ist vorgesehen, dass das Feld Trocknungsmodell eine Abhängigkeit einer Trocknungsrate von Erntegut auf der landwirtschaftlichen Fläche von mindestens einem erntegutspezifischen Parameter und/oder mindestens einem Umweltparameter definiert.

Das Feldtrocknungsmodell kann gemäß einer vorteilhaften Weiterbildung auch ein lernfähiges, auf künstlicher Intelligenz basierendes, Feldtrocknungsmodell sein. Vorzugsweise basiert das Feldtrocknungsmodell bei einer solchen Ausgestaltung auf künstlichen neuronalen Netzen, genetischen Algorithmen, Bayes'schen Netzen oder dergleichen, mittels derer die Abhängigkeit der Trocknungsrate von dem mindestens einen erntegutspezifischen Parameter und/oder dem mindestens einen Umweltparameter modelliert wird.

Ein solches Feldtrocknungsmodell gewährleistet, dass der komplexe Zusammenhang von Trocknungsrate und erntegutspezifischen Parametern und/oder Umweltparametern der Wirklichkeit entsprechend beschrieben werden kann, sodass zuverlässige und reproduzierbare Ergebnisse geliefert werden können, die den auf der landwirtschaftlichen Fläche vorherrschenden Zustand während der Bearbeitung mittels einer landwirtschaftlichen Maschinenanordnung widerspiegeln. Weiterhin wird sichergestellt, dass ein robustes Feldtrocknungsmodell von der Recheneinheit als Grundlage für die Aktualisierung der Prozessschritte und/oder Prozessparameter herangezogen wird.

Vorzugsweise ist vorgesehen, dass der mindestens eine erntegutspezifische Parameter eine Erntegutsorte, einen Trockensubstanzgehalt des Ernteguts, einen Blattflächenindex des Ernteguts, einen stomatären Widerstand des Ernteguts, eine Wachsschicht des Ernteguts, eine Bestandsdichte des Ernteguts, eine Bestandshöhe des Ernteguts, eine Stoppelhöhe, eine Schwaddichte des Ernteguts, eine Schwadhöhe des Ernteguts und/oder eine Schwadbreite des Ernteguts spezifiziert.

Weiter vorzugsweise ist vorgesehen, dass der mindestens eine Umweltparameter eine Bodenart, eine Bodenfeuchte, eine Luftdichte, eine Luftfeuchtigkeit, einen Luftdruck, eine Umgebungstemperatur, eine Sonneneinstrahlung, einen Bewölkungsgrad, eine Windgeschwindigkeit und/oder eine Windrichtung spezifiziert.

Insbesondere ist vorgesehen, dass der mindestens eine erntegutspezifische Parameter und/oder der mindestens eine Umweltparameter von maschineneigenen Sensorsystemen und/oder von maschinenfernen Sensorsystemen generiert und in der Speichereinheit des Fahrerassistenzsystems hinterlegt wird, wobei der mindestens eine erntegutspezifische Parameter und/oder Umweltparameter während der Bearbeitung der landwirtschaftlichen Fläche generiert wird und/oder ein historischer Parameter ist.

Die Möglichkeit verschiedene erntegutspezifische Parameter und/oder Umweltparameter als Eingangsgrößen des Feldtrocknungsmodells zu nutzen, die aktuell und/oder historisch sind, wirkt sich vorteilhaft darauf aus ein auf die vorliegenden Gegebenheiten hin ausgelegtes Modell zu schaffen.

Gemäß einer vorteilhaften Weiterbildung der Erfindung ist vorgesehen, dass in der Speichereinheit des Fahrerassistenzsystems mindestens zwei Feldtrocknungsmodelle hinterlegt sind.

Vorzugsweise ist vorgesehen, dass zumindest eines der Feldtrocknungsmodelle für eine definierte Schwadbreite von im Schwad abgelegten Erntegut gültig ist.

Die Verwendung verschiedener Feldtrocknungsmodelle für die Aktualisierung der Prozessschritte und/oder Prozessparameter einer Futterernteprozesskette sorgt für eine präzisere Anpassung der Futterernteprozesskette abhängig vom Trocknungsverhalten eines spezifischen Ernteguts bei spezifischen vorliegenden Bedingungen bzw. Gegebenheiten. Es ist beispielsweise so, dass im Schwad abgelegtes Erntegut abhängig von der Schwadbreite schneller oder langsamer trocknet, somit eine andere Trocknungsrate aufweist. Solche Spezifika des Trocknungsverhaltens von Erntegut können durch verschiedene abrufbare Feldtrocknungsmodelle besser erfasst werden.

Gemäß einer vorteilhaften Weiterbildung der Erfindung ist vorgesehen, dass das Aktualisieren der in der Feldbearbeitungskarte definierten Prozessschritte und/oder Prozessparameter ein Aktualisieren einer Reihenfolge der Prozessschritte, ein Hinzufügen und/oder Entfernen von Prozessschritten, ein Aktualisieren eines Beginn- und/oder Endzeitpunkts der Prozessschritte und/oder ein Aktualisieren einer Dauer zwischen Prozessschritten umfasst.

Somit ist es möglich den Futterernteprozess, also den Futterernteprozess in seiner Gesamtheit mit allen relevanten, beeinflussbaren Prozessschritten sowie Parametern, abhängig vom Trocknungsverhalten des Erntegut zu aktualisieren bzw. anzupassen bzw. umzugestalten, um sicherzustellen, dass ein qualitativ hochwertiges, für die Einlagerung geeignetes und einen hohen Energiegehalt aufweisendes Erntegut nach Abschluss des Futterernteprozesses erhalten wird.

Gemäß einer vorteilhaften Weiterbildung der Erfindung ist vorgesehen, dass die Prozessschritte Mähen, Aufbereiten, Wenden, Schwaden, Anwelken, Trocknen, Rechen, Schwadernte, Transportieren und/oder Einsilieren von Erntegut umfassen.

Alle möglichen Prozessschritte eines Futterernteprozesses bzw. einer Futterernteprozesskette können somit berücksichtigt werden und dabei abhängig vom aktuell vorherrschenden Trocknungsverhalten, also der Trocknungsrate, des Ernteguts aktualisiert bzw. angepasst bzw. umgestaltet werden.

Gemäß einer vorteilhaften Weiterbildung der Erfindung ist vorgesehen, dass die Prozessparameter arbeitsmaschinenspezifische Parameter, erntemaschinenspezifische Parameter, anbaugerätespezifische Parameter und/oder betriebsmittelspezifische Parameter sind.

Vorzugsweise ist vorgesehen, dass der mindestens eine arbeitsmaschinen- und/oder erntemaschinenspezifische Parameter mindestens eine Einstellung mindestens eines Arbeitsaggregats mindestens einer Arbeitsmaschine und/oder einer Erntemaschine, insbesondere eines Traktors, eines Feldhäckslers, eines Teleskopladers und/oder eines Radladers, spezifiziert.

Weiter vorzugsweise ist vorgesehen, dass der mindestens eine anbaugerätespezifische Parameter mindestens eine Einstellung mindestens eines Arbeitsaggregats mindestens eines Anbaugeräts, insbesondere eines Mähwerks, eines Aufbereiters, eines Wenders, eines Schwaders, einer Pick-up, eines Transportwagens und/oder einer Ballenpresse, spezifiziert.

Weiter vorzugsweise ist vorgesehen, dass der mindestens eine betriebsmittelspezifische Parameter ein Siliermittel, ein Wickelmaterial und/oder ein Silo spezifiziert.

Somit werden alle an einem Prozessschritt oder am gesamten Futterernteprozess bzw. der gesamten Futterernteprozesskette beteiligten Prozessteilnehmer und/oder Prozessressourcen bei der Aktualisierung mit berücksichtigt.

Gemäß einer vorteilhaften Weiterbildung der Erfindung ist vorgesehen, dass die Feldbearbeitungskarte einem Nutzer mittels einer Anzeigeeinheit während der Bearbeitung der landwirtschaftlichen Fläche angezeigt wird, wobei die Anzeigeeinheit Teil des Fahrerassistenzsystems der landwirtschaftlichen Maschinenanordnung, Teil eines Farmmanagementsystems und/oder Teil eines mobilen Endgeräts ist.

Gemäß einer vorteilhaften Weiterbildung der Erfindung ist vorgesehen, dass während der Bearbeitung der landwirtschaftlichen Fläche ein aktueller Trockensubstanzgehalt von Erntegut auf der landwirtschaftlichen Fläche teilflächenspezifisch mittels der Recheneinheit des Fahrerassistenzsystems anhand des Feldtrocknungsmodells prognostiziert wird.

Vorzugsweise ist vorgesehen, dass der Trockensubstanzgehalt des Ernteguts während der Bearbeitung der landwirtschaftlichen Fläche in der Feldbearbeitungskarte teilflächenspezifisch visualisiert wird.

Weiter vorzugsweise ist vorgesehen, dass der Trockensubstanzgehalt des Ernteguts während der Bearbeitung der landwirtschaftlichen Fläche in der Feldbearbeitungskarte teilflächenspezifisch grafisch visualisiert wird.

Gleichermaßen ist es vorgesehen, dass erntegutspezifische Parameter, Umweltparameter und/oder Prozessparameter während der Bearbeitung der landwirtschaftlichen Fläche in der Feldbearbeitungskarte teilflächenspezifisch visualisiert werden.

Indem dem Nutzer die Möglichkeit gegeben wird, die Feldbearbeitungskarte mit entsprechenden zuvor berechneten und/oder prognostizierten Informationen, Parametern und Daten, beispielsweise eines aktuell vorliegenden Trockensubstanzgehalts des Ernteguts, während der Bearbeitung der landwirtschaftlichen Fläche zu betrachten, kann dieser die landwirtschaftliche Maschinenanordnung bzw. die landwirtschaftlichen Maschinenanordnungen, die für die Durchführung eines Prozessschrittes bzw. der Futterernte Prozesskette erforderlich sind, anhand der aus der Feldbearbeitungskarte zu entnehmenden Informationen präzise steuern bzw. führen. Weiterhin wird dem Nutzer die Möglichkeit gegeben anhand der ihm mittels der Feldbearbeitungskarte angezeigten Informationen verschiedene Schlüsse bzw. Erkenntnisse im Hinblick auf bzw. für den Futterernteprozess selbst, eine Dokumentation des Futterernteprozesses, etwaige entstehende Kosten bei der Durchführung des Futterernteprozesses oder Nachbehandlungsmaßnahmen nach Abschluss des Futterernteprozesses zu ziehen bzw. zu erlangen.

Gemäß einer vorteilhaften Weiterbildung der Erfindung ist vorgesehen, dass während der Bearbeitung der landwirtschaftlichen Fläche Positionsdaten der landwirtschaftlichen Maschinenanordnung auf der landwirtschaftlichen Fläche mittels einer geeigneten Sensorik fortwährend aufgezeichnet werden, wobei die Recheneinheit des Fahrerassistenzsystems aus den aufgezeichneten Positionsdaten der landwirtschaftlichen Maschinenanordnung und der Feldbearbeitungskarte ein Bearbeitungsprofil für die landwirtschaftliche Maschinenanordnung erzeugt und dieses in der Speichereinheit des Fahrerassistenzsystems hinterlegt.

Ein Bearbeitungsprofil für eine landwirtschaftliche Maschinenanordnungen, dass durch Verknüpfung von Positionsdaten der landwirtschaftlichen Maschinenanordnung mit einer Bearbeitungskarte geschaffen wird, kann insbesondere im Hinblick auf die Planung zukünftiger Futterernteprozesse von Vorteil sein. Erkenntnisse aus vergangenen Futterernteprozessen können bei gleichen oder entsprechenden vorliegenden Gegebenheiten durch den Nutzer nachgenutzt werden, wobei auf die Durchführung von Aktualisierungen verzichtet werden kann. Insbesondere bei der Nutzung von älteren oder geringer ausgestatteten landwirtschaftlichen Maschinenanordnungen, die kein Fahrerassistenzsystems aufweisen, dass dazu eingerichtet ist, die zuvor beschriebene Aktualisierung während der Bearbeitung der landwirtschaftlichen Fläche durchzuführen, kann durch die Nutzung von Bearbeitungsprofilen durch den Nutzer trotz alledem sichergestellt werden, dass ein qualitativ hochwertiges, für die Einlagerung geeignetes und einen hohen Energiegehalt aufweisendes Erntegut bei einer Durchführung der im Bearbeitungsprofil definierten Futterernteprozesskette erhalten wird.

Die erfindungsgemäße Aufgabe wird ferner durch ein Fahrerassistenzsystem einer landwirtschaftlichen Maschinenanordnung gemäß dem unabhängigen Patentanspruch 16 gelöst.

Die Merkmale der abhängigen Patentansprüche 2 bis 15 sind gleichermaßen auf das erfindungsmäße Fahrerassistenzsystem übertragbar.

Die vorliegende Erfindung wird nachstehend anhand der in den Figuren abgebildeten Ausführungsformen näher beschrieben.

Es zeigen:
- FIG. 1: eine schematische und exemplarische Darstellung eines Futterernteprozesses; und
- FIG. 2: eine schematische und exemplarische Darstellung eines Fahrerassistenzsystems einer landwirtschaftlichen Maschinenanordnung im Kontext eines Futterernteprozesses.

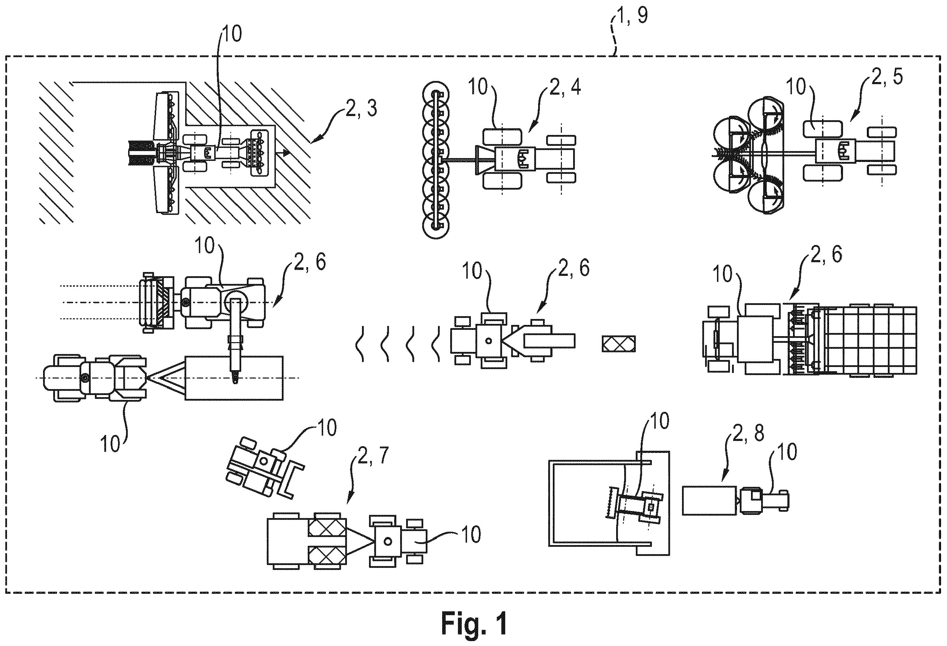

Fig. 1 zeigt schematisch und exemplarisch einen Futterernteprozess 1, wobei der dargestellte Futterernteprozess 1 eine Vielzahl an verschiedenen Prozessschritten 2 umfasst. Im Einzelnen sind in FIG. 1 als Prozessschritte 2 Mähen 3, Wenden oder Zetten 4, Schwaden 5, Schwadernte 6, Transportieren 7 und Einsilieren 8 von Erntegut abgebildet. Weitere Prozessschritte 2, die in FIG. 1 nicht explizit abgebildet sind, wie Aufbereiten, Anwelken, Trocknen und Rechen von Erntegut sind weiterhin mögliche Prozessschritte 2 des Futterernteprozesses 1. Aus Vereinfachungsgründen sind in FIG. 1 auch alternative Prozessschritte 2 dargestellt, die sich in der Praxis wechselseitig ausschließen, etwa Schwadernte 6 mittels Feldhäcksler, mittels Ballenpresse oder mittels Ladewagen. Jeder Futterernteprozess 1 umfasst eine anwendungsfallspezifische Auswahl und Reihenfolge der zuvor aufgeführten möglichen Prozessschritte 2. Eine solche anwendungsfallspezifische Auswahl und Reihenfolge an Prozessschritten 2 wird als Futterernteprozesskette 9 bezeichnet. Zumindest einige der Prozessschritte 2 der Futterernteprozesskette 9 werden mittels einer landwirtschaftlichen Maschinenanordnung 10 durchgeführt, die beispielsweise als Gespann aus landwirtschaftlicher Zugmaschine und adaptierten Anbaugerät oder als landwirtschaftliche Erntemaschine ausgeführt sein kann. Es liegt im Rahmen der Erfindung, dass die landwirtschaftliche Maschinenanordnung 10 selbstfahrend ausgeführt sein kann. Weiterhin liegt es im Rahmen der Erfindung, dass die landwirtschaftliche Maschinenanordnung 10 autonom, d.h. ohne Fahrer, den jeweiligen Prozessschritt 2 realisieren kann. Die landwirtschaftlichen Maschinenanordnungen 10 umfassen hier nicht näher beschriebene Arbeitsorgane.

In dem in FIG. 1 schematisch dargestellten Futterernteprozess 1 wird der Prozessschritt 2 Mähen 3 beispielsweise von einem Traktor mit Front- und Seitenmähwerken realisiert, wobei das Erntegut in einem einzigen Erntegutschwad abgelegt wird. Es liegt im Rahmen der Erfindung, dass das dreiteilige Mähwerk auch nur als ein- oder zweiteiliges Mähwerk ausgeführt ist und mehrere Erntegutschwaden bilden kann. Zudem kann das Erntegut im Prozessschritt 2 Mähen 3 auch in Breitablage auf der landwirtschaftlichen Fläche abgelegt werden.

Der Prozessschritt 2 Wenden oder Zetten 4 wird in dem in FIG. 1 schematisch dargestellten Futterernteprozess 1 beispielhaft mittels einer von einem Traktor gezogenen oder einer auf diesem aufgesattelten Heuwerbungsmaschine, auch als Wender oder Zetter bezeichnet, umgesetzt. Dieser Prozessschritt 2 ist dem Prozessschritt Mähen 3 nachgeordnet, wobei in diesem Fall im Prozessschritt 2 Mähen 3 das Erntegut in Breitablage abgelegt wird. Der Prozessschritt 2 Wenden oder Zetten 4 wird in Abhängigkeit von der Feuchte des in Breitablage abgelegten Erntegutes ein oder mehrmals durchgeführt.

Wurde das Erntegut in Breitablage auf der landwirtschaftlichen Fläche abgelegt, umfasst die Futterernteprozesskette 9 den Prozessschritt 2 Schwaden 5. Der Prozessschritt 2 Schwaden 5 wird in dem in FIG. 1 schematisch dargestellten Futterernteprozess 1 beispielshaft von einem Traktor-Schwader-Gespann realisiert, wobei der Schwader als Vierkreiselschwader ausgeführt ist und das Erntegut in einem einzigen Erntegutschwad ablegt wird. Denkbar ist hier aber auch der Einsatz von Ein- oder Mehrkreiselschwadern, welche das Erntegut in einem oder mehreren Erntegutschwaden auf der landwirtschaftlichen Fläche ablegen.

Der Erntegutschwad wird in dem in FIG. 1 schematisch dargestellten Futterernteprozess 1 im Prozessschritt Schwadernte 6 beispielhaft von einem Feldhäcksler aufgenommen, in an sich bekannter Weise zerkleinert und an einen von einem Traktor gezogenen Transportwagen übergeben. Alternativ kann der Erntegutschwad von einem von einem Traktor gezogenen Ladewagen aufgenommen werden. Ladewagen sind in der Regel mit einer als Pickup ausgeführten Aufsammeleinrichtung ausgestattet, können je nach Ausstattung eine Zerkleinerung des aufgenommenen Ernteguts vornehmen und dieses sodann in gewissem Umfang vorverdichtet an den eigentlichen Transportbehälter übergeben. Eine weiter Alternative kann die Aufnahme des Erntegutschwads durch eine von einem Traktor gezogene Ballenpresse, hier vorzugsweise als sogenannte Quaderballenpresse ausgeführte Ballenpresse, sein, wobei das Erntegut sodann als Erntegutballen auf der landwirtschaftlichen Fläche abgelegt wird.

An den Prozessschritt 2 Schwadernte 6 schließt sich in der Regel der Prozessschritt 2 Transportieren 7 des Ernteguts an. Sofern das Erntegut in Form eines Erntegutballens vorliegt, kommen hier in der Regel von Traktoren gezogene Pritschenwagen und Hubstapler, etwa Traktoren mit Frontlader oder sogenannte Teleskoplader, zum Aufnehmen und Überladen der Erntegutballen zum Einsatz. Wird das Erntegut an einen Transportwagen übergeben oder von einem Ladewagen aufgenommen erfolgt der Transport des Ernteguts in der Regel auch in diesem.

Der Prozessschritt 2 Einsilieren 8 des Erntegutes kann einerseits die Einlagerung der Erntegutballen umfassen. Andererseits kann das etwa von einem Transportwagen oder einem Ladewagen aufgenommene Erntegut in einem Silo eingelagert werden, wobei in FIG. 1 beispielhaft ein Flachsilo dargestellt ist. Die Einlagerung des Erntegutes in einem Flachsilo erfolgt in der Regel in der Weise, dass der von dem Traktor gezogene Lade- oder Transportwagen das Erntegut in das Silo abgibt und dort ein Verdichtungsfahrzeug das Erntegut in an sich bekannter Weise durch mehrmaliges Überrollen und Zusammenschieben verdichtet.

Der Futterernteprozess 1 setzt sich folglich aus dem Zusammenspiel des zu erntenden Erntegutes mit den die Futterernteprozesskette 9 bildenden Prozessschritten 2 und der bzw. den jeweils diesen Prozessschritten 2 zugeordneten erforderlichen landwirtschaftlichen Maschinenanordnungen 10 zusammen.

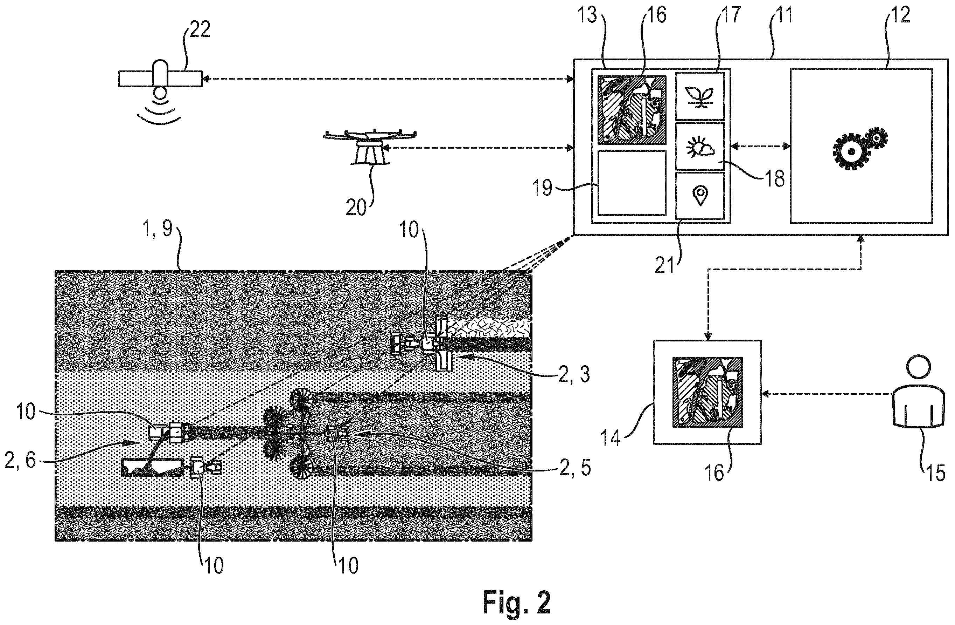

Jede landwirtschaftliche Maschinenanordnung 10 umfasst ein Fahrerassistenzsystem 11, das beispielhaft in FIG. 2 dargestellt ist. Das Fahrerassistenzsystem 11 verfügt über eine Recheneinheit 12 sowie eine mit der Recheneinheit 12 zur Übertragung von Daten kommunizierenden Speichereinheit 13. Das Fahrerassistenzsystem 11, insbesondere die Recheneinheit 12 des Fahrerassistenzsystems 11, ist mit einer Anzeigeeinheit 14 zur Übertragung von Daten verbunden bzw. kommuniziert mit dieser zur Übertragung von Daten. Die Anzeigeeinheit 14 kann Teil des Fahrerassistenzsystem 11, gleichermaßen aber auch Teil eines maschinenanordnungsfernen Farmmanagementsystems oder aber Teil eines mobilen Endgeräts, beispielsweise eines Smartphones oder eines Tablets, sein. Es ist genauso gut vorstellbar, dass s das Fahrerassistenzsystem 11, ein Farmmanagementsystem und auch ein mobiles Endgerät über eine eigene Anzeigeeinheit 14 verfügen. Die Anzeigeeinheit 14 kann über eine - in den FIGs. nicht dargestellte - Ein-Ausgabeeinheit verfügen, mittels der ein Nutzer 15 eine Einstellung oder Auswahl von diversen verschiedenen für die Bearbeitung der landwirtschaftlichen Fläche relevanten Parametern und Vorgaben vornehmen kann.

Zur Bearbeitung einer landwirtschaftlichen Fläche mittels einer oder mehrerer landwirtschaftlicher Maschinenanordnungen 10 ist es wesentlich, dass ein Nutzer 15 Kenntnis von den erforderlichen Prozessschritten 2 sowie im Idealfall den entsprechenden erforderlichen Prozessparametern des Futterernteprozesses 1 hat. Prozessparameter können hierbei beispielsweise arbeitsmaschinenspezifische Parameter, erntemaschinenspezifische Parameter, anbaugerätespezifische Parameter und/oder betriebsmittelspezifische Parameter sein. Im Detail spezifizieren arbeitsmaschinen- und/oder erntemaschinenspezifischen Parameter vorzugsweise Einstellungen eines oder mehrerer Arbeitsaggregate einer oder mehrerer Arbeitsmaschinen und/oder Erntemaschinen, beispielsweise eines Traktors, eines Feldhäckslers, eines Teleskopladers und/oder eines Radladers. Anbaugerätespezifische Parameter spezifizieren Einstellungen eines oder mehrerer Arbeitsaggregate eines oder mehrere Anbaugeräte, beispielsweise eines Mähwerks, eines Aufbereiters, eines Wenders, eines Schwaders, einer Pick-up, eines Transportwagens und/oder einer Ballenpresse. Betriebsmittelspezifische Parameter spezifizieren hingegen beispielsweise ein Siliermittel, ein Wickelmaterial und/oder ein Silo.

Damit der Nutzer 15 Kenntnis von den erforderlichen Prozessschritten 2 und/oder Prozessparametern einer spezifischen Erntegutprozesskette 9 hat, ist erfindungsgemäß eine Feldbearbeitungskarte 16 vorgesehen, welche bzw. in welcher die für die Erntegutprozesskette 9 erforderlichen Prozessschritte 2 und/oder Prozessparameter teilflächenspezifisch definiert bzw. definiert sind. Mit anderen Worten, die Feldbearbeitungskarte 16 gibt dem Nutzer 15 eine Auskunft darüber, welche Prozessschritte 2 in einer spezifischen Erntegutprozesskette 9 erforderlich sind, und vorzugsweise weiterhin eine Auskunft zu den zugehörigen erforderlichen Prozessparametern eines jeden Prozessschrittes 2. Diese Informationen, Daten bzw. Auskünfte werden dem Nutzer 15 mittels der Feldbearbeitungskarte 16 teilflächenspezifisch zur Verfügung gestellt. Die Feldbearbeitungskarte 16 ist in der Speichereinheit 13 des Fahrerassistenzsystems 11 einer landwirtschaftlichen Maschinenanordnung 10 hinterlegt bzw. abgespeichert. Die Feldbearbeitungskarte 16 bzw. eine sogenannte Initialfeldbearbeitungskarte 16 kann vor Beginn der Bearbeitung der landwirtschaftlichen Fläche beispielsweise mittels eines Farmmanagementsystems von dem Nutzer 15 oder automatisiert im Hinblick auf eine gewünschte Zielqualität des Ernteguts bzw. Futtermittels, das mittels des Futterernteprozesses 1 erzeugt werden soll, generiert werden und an die Speichereinheit 13 des Fahrerassistenzsystems 11 übermittelt werden.

Wie eingangs dargelegt, ist die den Futterernteprozess 1 bzw. die Futterernteprozesskette 9 maßgeblich beeinflussende Größe die Trocknungsrate von Erntegut auf der landwirtschaftlichen Fläche. Diese Größe ist abhängig von verschiedenen erntegutspezifischen Parametern 17 und/oder Umweltparametern 18. Erntegutspezifische Parameter 17 spezifizieren beispielsweise eine Erntegutsorte, einen Trockensubstanzgehalt des Ernteguts, einen Blattflächenindex des Ernteguts, einen stomatären Widerstand des Ernteguts, eine Wachsschicht des Ernteguts, eine Bestandsdichte des Ernteguts, eine Bestandshöhe des Ernteguts, eine Stoppelhöhe, eine Schwaddichte des Ernteguts, eine Schwadhöhe des Ernteguts und/oder eine Schwadbreite des Ernteguts. Umweltparameter 18 spezifizieren hingegen beispielsweise eine Bodenart, eine Bodenfeuchte, eine Luftdichte, eine Luftfeuchtigkeit, einen Luftdruck, eine Umgebungstemperatur, eine Sonneneinstrahlung, einen Bewölkungsgrad, eine Windgeschwindigkeit und/oder eine Windrichtung.

Mit anderen Worten, die Trocknungsrate von Erntegut unterliegt während eines Futterernteprozesses 1, also entlang der Futterernteprozesskette 9, einer erheblichen Änderung. Diese Änderung der Trocknungsrate beeinflusst wiederum die durchzuführenden Prozessschritte 2 eines Futterernteprozesses 1 maßgeblich. So hat eine Änderung der Trocknungsrate beispielsweise die Änderung einer Reihenfolge der durchzuführenden Prozessschritte 2 des Futterernteprozesses 1 bzw. in der Futterernteprozesskette 9 zur Folge. Weiterhin kann es erforderlich werden spezifische Prozessschritte 2 in die Futterernteprozesskette 9 hinzuzufügen und/oder aus dieser zu entfernen. Auch kann es notwendig werden einen Beginn- und/oder Endzeitpunkt eines oder mehrerer Prozessschritte 2 und/oder die Dauer zwischen Prozessschritten 2 zu verändern. Herkömmlicherweise muss eine Änderung der Trocknungsrate des Ernteguts von dem Nutzer 15 während des Futterernteprozesses 1 selbsttätig überwacht werden, wobei der Nutzer 15 abhängig von der Änderung selbst entscheiden muss welche Auswirkungen die Änderung auf die durchzuführenden Prozessschritte 2 des Futterernteprozesses 1 hat.

Um den Nutzer 15 bei dieser Aufgabe zu entlasten bzw. von dieser Aufgabe zu entbinden, ist erfindungsgemäß vorgesehen, dass die Recheneinheit 12 des Fahrerassistenzsystems 11 einer landwirtschaftlichen Maschinenanordnung 10 während der Bearbeitung einer landwirtschaftlichen Fläche die in der Feldbearbeitungskarte 16 definierten Prozessschritte 2 und/oder Prozessparameter fortwährend aktualisiert. Hierzu greift die Recheneinheit 12 auf die in der Speichereinheit 13 hinterlegte Feldbearbeitungskarte 16 zu, die bzw. in der die erforderlichen Prozessschritte 2 und/oder Prozessparameter eines spezifischen Futterernteprozesses 1 bzw. einer Futterernteprozesskette 9 teilflächenspezifisch definiert bzw. definiert sind.

Um dem Einfluss der Änderung der Trocknungsrate von Erntegut im Futterernteprozess 1 bzw. entlang der Futterernteprozesskette 9 auf die verschiedenen Prozessschritte 2 entsprechend Rechnung zu tragen, ist es wesentlich, dass die Recheneinheit 12 die Aktualisierung der in der Feldbearbeitungskarte 16 definierten Prozessschritte 2 und/oder Prozessparameter während der Bearbeitung der landwirtschaftlichen Fläche anhand eines in der Speichereinheit 13 hinterlegten bzw. abgespeicherten Feldtrocknungsmodells 19 durchführt. Dieses Feldtrocknungsmodell 19 kann ein empirisches oder aber ein physikalisches Feldtrocknungsmodell 19 sein. Das Feldtrocknungsmodell 19 definiert die Trocknungsrate von Erntegut auf einer landwirtschaftlichen Fläche abhängig von mindestens einem der zuvor genannten erntegutspezifischen Parameter 17 und/oder mindestens einem der zuvor genannten Umweltparameter 18. Vorzugsweise basiert das Feldtrocknungsmodell 19 auf mindestens einer auf einer thermodynamischen Gesetzmäßigkeit beruhenden Exponentialfunktion, welche einen Zusammenhang der Trocknungsrate von dem mindestens einen erntegutspezifischen Parameter 17 und/oder dem mindestens einen Umweltparameter 18 beschreibt. Das Feldtrocknungsmodell 19 kann gleichermaßen ein lernfähiges, auf künstlicher Intelligenz basierendes, Feldtrocknungsmodell 19 sein. Beispielsweise kann das Feldtrocknungsmodell 19 auf künstlichen neuronalen Netzen, genetischen Algorithmen, Bayes'schen Netzen oder ähnlichen Ansätzen basieren, mittels derer die Abhängigkeit der Trocknungsrate von dem mindestens einen erntegutspezifischen Parameter 17 und/oder dem mindestens einen Umweltparameter 18 modelliert wird und das Feldtrocknungsmodell 19 lernfähig machen.

Abhängig von der jeweils während der Bearbeitung der landwirtschaftlichen Fläche anhand des Feldtrocknungsmodells 19 durch die Recheneinheit 12 des Fahrerassistenzsystems 11 ermittelten Trocknungsrate des Ernteguts auf der landwirtschaftlichen Fläche aktualisiert die Recheneinheit 12 automatisch die für einen spezifischen Futterernteprozess 1 erforderlichen Prozessschritte 2 und/oder Prozessparameter. Beispielsweise ist es vorstellbar, dass die Recheneinheit 12 die ermittelte Trocknungsrate mit einer definierten und in der Speichereinheit 13 des Fahrerassistenzsystems 11 hinterlegten Trocknungsrate für einen spezifischen Prozessschritt 2 vergleicht und abhängig von dem Vergleichsergebnis den spezifischen Prozessschritte 2 und/oder hierfür spezifische Prozessparameter oder aber mehrere, insbesondere nachgelagerte, Prozessschritte 2 und/oder hierfür spezifische Prozessparameter aktualisiert bzw. anpasst, beispielsweise indem abhängig von dem Vergleichsergebnis verschiedene in der Speichereinheit 13 des Fahrerassistenzsystems 11 hinterlegte Regeln für die Aktualisierung von Prozessschritten 2 und/oder Prozessparametern oder aber einer ganzen Futterernteprozesskette 9 von der Recheneinheit 12 des Fahrerassistenzsystems 11 abgearbeitet bzw. ausgeführt werden. Die Recheneinheit 12 kann hierfür entsprechende Bausteine wie beispielsweise eine Rule-Interpreter oder dergleichen umfassen.

Die Recheneinheit 12 aktualisiert beispielsweise die Reihenfolge der durchzuführenden Prozessschritte 2, fügt einen oder mehrere Prozessschritte 2 zum spezifischen Futterernteprozess 1 bzw. zur spezifischen Futterernteprozesskette 9 hinzu oder entfernt einen oder mehrere Prozessschritte 2 aus dem spezifischen Futterernteprozess 1 bzw. der spezifischen Futterernteprozesskette 9, aktualisiert einen Beginn-und/oder Endzeitpunkt der erforderlichen Prozessschritte 2 und/oder aktualisiert eine Dauer zwischen verschiedenen erforderlichen Prozessschritten 2. Dadurch, dass die Recheneinheit 12 die Aktualisierung fortwährend während der Bearbeitung der landwirtschaftlichen Fläche durch eine landwirtschaftliche Maschinenanordnung 10 durchführt, wird die durchzuführende Futterernteprozesskette 9 kontinuierlich in Abhängigkeit der aktuellen Trocknungsrate des Ernteguts aktualisiert bzw. angepasst.

Anhand der unter Berücksichtigung des Feldtrocknungsmodells 19 aktualisierten Prozessschritte 2 und/oder Prozessparameter eines spezifischen Futterernteprozesses 1 bzw. einer spezifischen Futterernteprozesskette 9 wird mittels der Recheneinheit 12 des Fahrerassistenzsystems 11 eine aktualisierte Feldbearbeitungskarte 16 generiert und in der Speichereinheit 13 des Fahrerassistenzsystems 11 hinterlegt. Somit steht in der Speichereinheit 13 stets eine aktualisierte Feldbearbeitungskarte 16 zur Verfügung, die der Nutzer 15 für die Bearbeitung der landwirtschaftlichen Fläche in den verschiedenen Prozessschritten 2 des spezifischen Futterernte Prozesses 1 heranziehen kann. In einer bevorzugten Ausgestaltung kann die jeweilige Feldbearbeitungskarte 16 von der Recheneinheit 12 des Fahrerassistenz Systems 11 auch unmittelbar genutzt werden, um automatisiert verschiedene Arbeitsaggregate anhand der Prozessparameter für die Durchführung des bzw. der spezifischen Prozessschritte 2 anzusteuern bzw. einzustellen. Die Feldbearbeitungskarte 16 umfasst bzw. definiert hierfür Steuersignale, die von dem jeweiligen Prozessschritte 2 und den zugehörigen Prozessparametern abhängig sind. Die Recheneinheit 12 übermittelt diese Steuersignale entweder direkt an die entsprechenden Arbeitsaggregate der landwirtschaftlichen Maschinenanordnungen 10 oder aber an weitere Steuereinrichtungen der landwirtschaftlichen Maschinenanordnungen 10, die die Einstellung der Arbeitsaggregate vornehmen. Eine solche Ausgestaltung ist insbesondere im Kontext von selbstfahrenden und/oder autonomen landwirtschaftlichen Maschinenanordnungen 10 von Relevanz.

Der bzw. die von dem Feldtrocknungsmodell 19 herangezogenen erntegutspezifischen Parameter 17 und/oder Umweltparameter 18 zur Bestimmung der Trocknungsrate können wahlweise von Sensorsystemen der landwirtschaftlichen Maschinenanordnungen 10 und/oder maschinenfernen Sensorsystemen, beispielsweise einer Drohne 20, die mit dem Fahrerassistenzsystem 11 der landwirtschaftlichen Maschinenanordnung 10 kommunizieren können, generiert werden und in der Speichereinheit 13 des Fahrerassistenzsystems 11 hinterlegt werden. Die Parameter können dabei wahlweise während der Bearbeitung der landwirtschaftlichen Fläche, also vor Ort, generiert werden oder aber als historische Parameter in der Speichereinheit 13 des Fahrerassistenzsystems 11 bereitstehen. Historische Parameter schließen dabei auch erntegutspezifische Parameter 17 und/oder Umweltparameter 18 ein, die aus einem Vorjahr stammen.

In der Speichereinheit 13 des Fahrerassistenzsystems 11 kann nicht nur ein Feldtrocknungsmodell 19 hinterlegt sein, sondern auch zwei oder mehr Feldtrocknungsmodelle 19. Diese Feldtrocknungsmodelle 19 sind hinsichtlich verschiedener Erntegutbedingungen definiert. Beispielsweise könne in der Speichereinheit 13 verschiedene Feldtrocknungsmodelle 19 für verschiedene Erntegutsorten bzw. Feldfrüchte hinterlegt sein. Vorzugsweise sind verschiedene Feldtrocknungsmodelle 19 für verschiedene definierte Schwadbreiten von im Schwad abgelegten Erntegut in der Speichereinheit 13 hinterlegt.

Die Recheneinheit 12 des Fahrerassistenzsystems 11 ist ferner dazu in der Lage anhand der bestimmten Trocknungsrate des Erntegut auf der landwirtschaftlichen Fläche einen aktuellen Trockensubstanzgehalt des Ernteguts zu prognostizieren bzw. bestimmen. Hierzu wird ausgehend von einem initialen Trockensubstanzgehalt, der beispielsweise bei der Mahd des Ernteguts bestimmt wird, mittels der Trocknungsrate der jeweils aktuelle Trockensubstanzgehalt des Erntegut in einem spezifischen Prozessschritte 2 des Futterernteprozesses 1 bestimmt. Dieser erntegutspezifische Parameter 17 wird in der Speichereinheit 13 hinterlegt bzw. abgespeichert, sodass die Bestimmung des aktuellen Trockensubstanzgehalts in einem nachgelagerten Prozessschritte 2 anhand des letzten aktualisierten Trockensubstanzgehalts in Abhängigkeit der aktuell vorherrschenden Trocknungsrate aktualisiert werden kann. Für die Bestimmung des Trockensubstanzgehalt des Ernteguts kann eine entsprechende von der Recheneinheit 12 anzuwendende Verarbeitungsvorschrift in der Speichereinheit 13 hinterlegt bzw. abgespeichert sein.

Damit der Nutzer 15 die landwirtschaftliche Maschinenanordnungen 10, die im jeweiligen Prozessschritte 2 des Futterernteprozesses 1 genutzt wird für die Bearbeitung der landwirtschaftlichen Fläche entsprechend präzise führen bzw. steuern kann, besteht die Möglichkeit, dass die Feldbearbeitungskarte 16 mittels der Anzeigeeinheit 14 während der Bearbeitung der landwirtschaftlichen Fläche dem Nutzer 15 angezeigt wird. Neben der teilflächenspezifischen Anzeige von Prozessschritten 2 und/oder Prozessparameter in der Feldbearbeitungskarte 16 besteht weiterhin die Möglichkeit den aktuellen Trockensubstanzgehalt des Erntegut auf der landwirtschaftlichen Fläche während der Bearbeitung der landwirtschaftlichen Fläche in der Feldbearbeitungskarte 16 teilflächenspezifisch zu visualisieren. Vorzugsweise erfolgt die Visualisierung des Trockensubstanzgehalt des Erntegut grafisch, beispielsweise über eine farbliche Hervorhebung der unterschiedlichen Teilflächen der in dem Feld Bearbeitungskarte 16 dargestellten landwirtschaftlichen Fläche. Andere Formen der grafischen Hervorhebung sind gleichermaßen möglich. Die Darstellung von Informationen, Daten bzw. Auskünften in der Feldbearbeitungskarte 16 ist nicht auf eine Darstellung des Trockensubstanzgehaltes beschränkt. Vielmehr können verschiedene Prozessparameter, erntegutspezifische Parameter 17 und/oder Umweltparameter 18 dargestellt werden.

Es besteht weiterhin die Möglichkeit Bearbeitungsprofile für die landwirtschaftlichen Maschinenanordnungen 10 zu generieren, sodass für eine landwirtschaftliche Maschinenanordnungen 10 abhängig vom Prozessschritt 2 eine spezifische Bearbeitungscharakteristik für die landwirtschaftliche Fläche vorliegt. Hierzu werden während der Bearbeitung der landwirtschaftlichen Fläche Positionsdaten 21 der landwirtschaftlichen Maschinenanordnungen 10 auf der landwirtschaftlichen Fläche mittels einer geeigneten Sensorik, beispielsweise über eine - in den FIGs. nicht dargestellte - Positionsbestimmungseinrichtung, die Teil des Fahrerassistenzsystems 11 der landwirtschaftlichen Maschinenanordnung 10 ist oder zumindest mit dem Fahrerassistenzsystem 11 und einem Satelliten 22 kommuniziert, fortwährend aufgezeichnet. Diese Positionsdaten 21 werden von der Recheneinheit 12 des Fahrerassistenzsystems 11 mit der Feldbearbeitungskarte 16 gemeinsam zu einem Bearbeitungsprofil für die landwirtschaftliche Maschinenanordnungen 10 kombiniert, welches in der Speichereinheit 13 des Fahrerassistenzsystems 11 hinterlegt wird. Die Positionsdaten 21 der landwirtschaftlichen Maschinenanordnungen 10 werden dabei vorzugsweise einem jeweiligen durchgeführten Prozessschritt 2 und einer Zeit zugeordnet, beispielsweise indem die Positionsdaten 21 mit einem oder mehreren spezifischen digitalen Marker versehen werden. Somit sind in dem Bearbeitungsprofil für die landwirtschaftliche Maschinenanordnungen 10 die Positionsdaten 21 unmittelbar mit einem Prozessschritte 2 und/oder einem oder mehrerer Prozessparameter eine Futterernteprozesses 1 bzw. einer Futterernteprozesskette 9 verknüpft.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Futterernteprozess
- 2: Prozessschritte
- 3: Prozessschritt Mähen
- 4: Prozessschritt Wenden oder Zetten
- 5: Prozessschritt Schwaden
- 6: Prozessschritt Schwadernte
- 7: Prozessschritt Transportieren
- 8: Prozessschritt Einsilieren
- 9: Futterernteprozesskette
- 10: Landwirtschaftliche Maschinenanordnung
- 11: Fahrerassistenzsystem
- 12: Recheneinheit
- 13: Speichereinheit
- 14: Anzeigeeinheit
- 15: Nutzer
- 16: Feldbearbeitungskarte
- 17: Erntegutspezifischer Parameter
- 18: Umweltparameter
- 19: Feldtrocknungsmodell
- 20: Drohne
- 21: Positionsdaten
- 22: Satellit

## Patentansprüche

1. Verfahren zur Bearbeitung einer landwirtschaftlichen Fläche mittels mindestens einer landwirtschaftlichen Maschinenanordnung (10), insbesondere eines Gespanns aus landwirtschaftlichem Zugfahrzeug und adaptierten Anbaugerät, einer landwirtschaftlichen Erntemaschine oder dergleichen, wobei die mindestens eine landwirtschaftliche Maschinenanordnung (10) ein Fahrerassistenzsystem (11) umfasst, welches über eine Recheneinheit (12) sowie eine mit der Recheneinheit (12) zur Übertragung von Daten kommunizierende Speichereinheit (13) verfügt, wobei in der Speichereinheit (13) eine Feldbearbeitungskarte (16) hinterlegt ist, welche für die Bearbeitung der landwirtschaftlichen Fläche erforderliche Prozessschritte (2) und/oder Prozessparameter teilflächenspezifisch definiert, **dadurch gekennzeichnet, dass** die in der Feldbearbeitungskarte (16) definierten Prozessschritte (2) und/oder Prozessparameter während der Bearbeitung der landwirtschaftlichen Fläche fortwährend mittels der Recheneinheit (12) des Fahrerassistenzsystems (11) anhand eines in der Speichereinheit (13) hinterlegten empirischen oder physikalischen Feldtrocknungsmodells (19) aktualisiert werden.

2. Verfahren nach Anspruch 1, **dadurch gekennzeichnet, dass** die Recheneinheit (12) eine aktualisierte Feldbearbeitungskarte (16) generiert und diese in der Speichereinheit (13) des Fahrerassistenzsystems (11) hinterlegt.

3. Verfahren nach Anspruch 1 oder 2, **dadurch gekennzeichnet, dass** das Feldtrocknungsmodell (19) auf mindestens einer auf einer thermodynamischen Gesetzmäßigkeit beruhenden Exponentialfunktion basiert.

4. Verfahren nach einem der Ansprüche 1 bis 3, **dadurch gekennzeichnet, dass** das Feldtrocknungsmodell (19) eine Abhängigkeit einer Trocknungsrate von Erntegut auf der landwirtschaftlichen Fläche von mindestens einem erntegutspezifischen Parameter (17) und/oder mindestens einem Umweltparameter (18) definiert.

5. Verfahren nach Anspruch 4, **dadurch gekennzeichnet, dass** der mindestens eine erntegutspezifische Parameter (17) eine Erntegutsorte, einen Trockensubstanzgehalt des Ernteguts, einen Blattflächenindex des Ernteguts, einen stomatären Widerstand des Ernteguts, eine Wachsschicht des Ernteguts, eine Bestandsdichte des Ernteguts, eine Bestandshöhe des Ernteguts, eine Stoppelhöhe, eine Schwaddichte des Ernteguts, eine Schwadhöhe des Ernteguts und/oder eine Schwadbreite des Ernteguts spezifiziert; und/oder
der mindestens eine Umweltparameter (18) eine Bodenart, eine Bodenfeuchte, eine Luftdichte, eine Luftfeuchtigkeit, einen Luftdruck, eine Umgebungstemperatur, eine Sonneneinstrahlung, einen Bewölkungsgrad, eine Windgeschwindigkeit und/oder eine Windrichtung spezifiziert.

6. Verfahren nach Anspruch 4 oder 5, **dadurch gekennzeichnet, dass** der mindestens eine erntegutspezifische Parameter (17) und/oder der mindestens eine Umweltparameter (18) von maschineneigenen Sensorsystemen und/oder von maschinenfernen Sensorsystemen generiert und in der Speichereinheit (13) des Fahrerassistenzsystems (11) hinterlegt wird, wobei der mindestens eine erntegutspezifische Parameter (17) und/oder Umweltparameter (18) während der Bearbeitung der landwirtschaftlichen Fläche generiert wird und/oder ein historischer Parameter ist.

7. Verfahren nach einem der Ansprüche 1 bis 6, **dadurch gekennzeichnet, dass** in der Speichereinheit (13) des Fahrerassistenzsystems (11) mindestens zwei Feldtrocknungsmodelle (19) hinterlegt sind, wobei, vorzugsweise, zumindest eines der Feldtrocknungsmodelle (19) für eine definierte Schwadbreite von im Schwad abgelegten Erntegut gültig ist.

8. Verfahren nach einem der Ansprüche 1 bis 7, **dadurch gekennzeichnet, dass** das Aktualisieren der in der Feldbearbeitungskarte (16) definierten Prozessschritte (2) und/oder Prozessparameter ein Aktualisieren einer Reihenfolge der Prozessschritte (2), ein Hinzufügen und/oder Entfernen von Prozessschritten (2), ein Aktualisieren eines Beginn- und/oder Endzeitpunkts der Prozessschritte (2) und/oder ein Aktualisieren einer Dauer zwischen Prozessschritten (2) umfasst.

9. Verfahren nach einem der Ansprüche 1 bis 8, **dadurch gekennzeichnet, dass** die Prozessschritte (2) Mähen (3), Aufbereiten, Wenden (4), Schwaden (5), Anwelken, Trocknen, Rechen, Schwadernte (6), Transportieren (7) und/oder Einsilieren (8) von Erntegut umfassen.

10. Verfahren nach einem der Ansprüche 1 bis 9, **dadurch gekennzeichnet, dass** die Prozessparameter arbeitsmaschinenspezifische Parameter, erntemaschinenspezifische Parameter, anbaugerätespezifische Parameter und/oder betriebsmittelspezifische Parameter sind.

11. Verfahren nach Anspruch 10, **dadurch gekennzeichnet, dass**
der mindestens eine arbeitsmaschinen- und/oder erntemaschinenspezifische Parameter mindestens eine Einstellung mindestens eines Arbeitsaggregats mindestens einer Arbeitsmaschine und/oder einer Erntemaschine, insbesondere eines Traktors, eines Feldhäckslers, eines Teleskopladers und/oder eines Radladers, spezifiziert;
der mindestens eine anbaugerätespezifische Parameter mindestens eine Einstellung mindestens eines Arbeitsaggregats mindestens eines Anbaugeräts, insbesondere eines Mähwerks, eines Aufbereiters, eines Wenders, eines Schwaders, einer Pick-up, eines Transportwagens und/oder einer Ballenpresse, spezifiziert; und/oder der mindestens eine betriebsmittelspezifische Parameter ein Siliermittel, ein Wickelmaterial und/oder ein Silo spezifiziert.

12. Verfahren nach einem der Ansprüche 1 bis 11, **dadurch gekennzeichnet, dass** die Feldbearbeitungskarte (16) einem Nutzer (15) mittels einer Anzeigeeinheit (14) während der Bearbeitung der landwirtschaftlichen Fläche angezeigt wird, wobei die Anzeigeeinheit (14) Teil des Fahrerassistenzsystems (11) der landwirtschaftlichen Maschinenanordnung (10), Teil eines Farmmanagementsystems und/oder Teil eines mobilen Endgeräts ist.

13. Verfahren nach einem der Ansprüche 1 bis 12, **dadurch gekennzeichnet, dass** während der Bearbeitung der landwirtschaftlichen Fläche ein aktueller Trockensubstanzgehalt von Erntegut auf der landwirtschaftlichen Fläche teilflächenspezifisch mittels der Recheneinheit (12) des Fahrerassistenzsystems (11) anhand des Feldtrocknungsmodells (19) prognostiziert wird.

14. Verfahren nach Anspruch 12 und 13, **dadurch gekennzeichnet, dass** der Trockensubstanzgehalt des Ernteguts während der Bearbeitung der landwirtschaftlichen Fläche in der Feldbearbeitungskarte (16) teilflächenspezifisch, vorzugsweise grafisch, visualisiert wird.

15. Verfahren nach einem der Ansprüche 1 bis 14, **dadurch gekennzeichnet, dass** während der Bearbeitung der landwirtschaftlichen Fläche Positionsdaten (21) der landwirtschaftlichen Maschinenanordnung (10) auf der landwirtschaftlichen Fläche mittels einer geeigneten Sensorik fortwährend aufgezeichnet werden, wobei die Recheneinheit (12) des Fahrerassistenzsystems (11) aus den aufgezeichneten Positionsdaten (21) der landwirtschaftlichen Maschinenanordnung (10) und der Feldbearbeitungskarte (16) ein Bearbeitungsprofil für die landwirtschaftliche Maschinenanordnung (10) erzeugt und dieses in der Speichereinheit (13) des Fahrerassistenzsystems (11) hinterlegt.

16. Fahrerassistenzsystem (11) einer landwirtschaftlichen Maschinenanordnung (10), insbesondere eines Gespanns aus landwirtschaftlichem Zugfahrzeug und adaptiertem Anbaugerät, einer landwirtschaftlichen Erntemaschine oder dergleichen, wobei das Fahrerassistenzsystem (11) eine Recheneinheit (12) sowie eine mit der Recheneinheit (12) zur Übertragung von Daten kommunizierende Speichereinheit (13) umfasst, wobei in der Speichereinheit (13) eine Feldbearbeitungskarte (16) hinterlegt ist, welche für eine Bearbeitung einer landwirtschaftlichen Fläche erforderliche Prozessschritte (2) und/oder Prozessparameter teilflächenspezifisch definiert, **dadurch gekennzeichnet, dass** die Recheneinheit (12) des Fahrerassistenzsystems (11) dazu eingerichtet ist, die in der Feldbearbeitungskarte (16) definierten Prozessschritte (2) und/oder Prozessparameter während der Bearbeitung der landwirtschaftlichen Fläche mittels der landwirtschaftlichen Maschinenanordnung (10) fortwährend anhand eines in der Speichereinheit (13) hinterlegten empirischen oder physikalischen Feldtrocknungsmodells (19) zu aktualisieren.
